# EUROPÄISCHE PATENTSCHRIFT

(11) **EP 0 601 442 B1**
(45) Veröffentlichungstag und Bekanntmachung des Hinweises auf die Patenterteilung: **28.08.1996**
(21) Anmeldenummer: 93119264.5
(22) Anmeldetag: 30.11.1993
(51) Int. Cl.: F16L 1/036

(54) **Rohrverlegung mit mitlaufender Vortriebspresse**
Pipe laying process having simultaneous driving press
Procédé pour poser des tuyaux avec une presse de commande simultanée

(30) Priorität: 11.12.1992 DE 4241856
(43) Veröffentlichungstag der Anmeldung: 15.06.1994
(73) Patentinhaber: CHRISTIAN KOST BAUUNTERNEHMUNG GmbH, D-50170 Kerpen (DE)
(72) Erfinder: Büttgen, Gregor, D-52457 Aldenhoven (DE)
(74) Vertreter: Stachow, Ernst-Walther, Prof. Dr.

(56) Entgegenhaltungen:
- DE-C- 2 603 565

## Beschreibung

Die Erfindung betrifft ein Verfahren zum Verlegen von Leitungsrohren, insbesondere von Kanalisationsrohren, wobei aus einer Startgrube heraus die Leitungsrohre mit einer Vortriebseinrichtung, die im wesentlichen aus einer Vortriebspresse und einem Vortriebswerkzeug besteht, in das Erdreich verlegt werden und mit Hilfe einer überirdischen Fördereinrichtung das anfallende Bodenmaterial abgetragen wird und wobei das zu verlegende Leitungsrohr hinter der in der Startgrube höhen- und fluchtgerecht eingebrachten Vortriebseinrichtung auf ein Auflager aufgebracht wird sowie eine Vorrichtung zur Durchführung des Verfahrens mit einem Schneidschuh und einer über eine Druckausgleichseinrichtung am Schneidschuh anliegenden Vortriebspresse.

Bisher bekannte Verfahren der eingangs genannten Art weisen oftmals den Nachteil auf, daß die Rohrleitung bis zur Beendigung des gesamten Vortriebsvorganges in Bewegung bleibt und dadurch Anschlußleitungen nicht unmittelbar angeschlossen werden können. Die Baugrube bleibt bis zur Beendigung des Vortriebsvorganges offen und kann erst anschließend verfüllt werden. Daraus ergeben sich aus der Verkehrsführung Schwierigkeiten und eventuell auch hohe Verbaukosten.

Ein weiterer Nachteil bisher bekannter Verfahren liegt darin, daß nur Vortriebslängen zwischen ca. 100 und 200 m möglich sind. Bei kürzeren Vortriebslängen fallen sehr hohe Rüstkosten in der Startgrube an. Bei längeren Vortriebslängen bewirken zunehmende Haft- und Gleitreibungskräfte eine ansteigende Druckbelastung auf das Vortriebsrohr bis über das zulässige Maß hinaus oder die anfallenden Haft- und Gleitreibungskräfte werden durch die begrenzten Vorpreßkräfte der Vortriebspressen nicht mehr bewältigt.

Bei einem bekannten Verfahren der genannten Art (DE 26 03 565 C2) wird in einer Baugrube, der sogenannten Startgrube, die Vortriebspresse und das Vortriebswerkzeug eingebracht. Eine Presse, ein Druckausgleichsring, Gleitschienen und eine Druckausgleichsvorrichtung werden dabei stationär in der Startgrube montiert. Danach wird ein Vortriebswerkzeug, im allgemeinen ein Schneidschuh, nach vorne gedrückt. Nach Erreichen einer Länge, die in etwa der Länge eines zu verlegenden Leitungsrohrs entspricht, wird die Vortriebspresse in zur Vortriebsrichtung entgegengesetzter Richtung zusammengefahren und von oben ein Leitungsrohr zwischen Vortriebspresse und Schneidschuh abgesenkt. Danach wird wieder die Vortriebspresse ausgefahren, wobei das eingesetzte Leitungsrohr und der Schneidschuh nach vorne getrieben werden. Nach Erreichen einer Länge, die in etwa der Länge des nächsten zu verlegenden Leitungsrohrs entspricht, wird die Vortriebspresse wieder zusammengefahren und das nächste zu verlegende Leitungsrohr von oben eingesetzt. Das anfallende Erdreich wird dabei überirdisch von einer Fördereinrichtung, im allgemeinen von einem Bagger, in Höhe des arbeitenden Schneidschuhs abgetragen.

Wegen der durch die aufgebrachten Vortriebskräfte entstehenden Exzentrizitäten erscheinen bei zunehmenden Vortriebslängen Verdrehungseffekte um die Rohrachse, so daß lediglich Leitungsrohre, deren Schwerpunkt in der Rohrachse liegt, verlegt werden können.

Der Erfindung liegt daher die Aufgabe zugrunde, ein neues Verfahren zum Verlegen von beliebigen Leitungsrohren zu entwickeln, das mit geringerem Aufwand wirtschaftlich arbeitet und die oben genannten Nachteile weitgehend vermeidet.

Erfindungsgemäß wird diese Aufgabe mit einem Verfahren gelöst, welches dadurch gekennzeichnet ist, daß nach Aufbringen des zu verlegenden Leitungsrohres auf das Auflager das Vortriebswerkzeug durch die Vortriebspresse vorgedrückt wird und das Rohrauflager schneidet, indem die Vortriebspresse das Leitungsrohr als Widerlager benutzt, daß nach Erreichen eines Vorschubs, der etwa der Länge des nächsten zu verlegenden Leitungsrohrs entspricht, die Vortriebspresse in Vorschubrichtung zusammengefahren wird, und daß danach auf das frei gewordene Rohrauflager von oben das nächste zu verlegende Leitungsrohr aufgebracht wird, welches wiederum von der Vortriebspresse als Widerlager benutzt wird, und sich der gesamte Vorgang wiederholt.

Mit dem erfindungsgemäßen Verfahren ist es problemlos möglich, beliebig lange Verlegelängen zu erstellen. Darüber hinaus zeichnet sich dieses Verfahren dadurch aus, daß kein Arbeitsraum neben den Rohren erforderlich ist und deshalb geringere Aushubmaßen und Grabenbreiten auftreten. Da die neu verlegten Leitungsrohre unmittelbar nach der Verlegung ihre endgültige Lage erhalten, kann danach sofort die Grabenverfüllung erfolgen.

Des weiteren zeichnet sich dieses Verfahren auch dadurch aus, daß die frisch verlegten Leitungsrohre sofort an ein schon bestehendes Leitungsnetz angeschlossen werden können. Auch können Leitungsrohre verlegt werden, bei denen Einbauteile bereits eingebaut sind, da bei diesem Verlegeverfahren Verdrehungseffekte vermieden werden.

Zweckmäßigerweise werden die Leitungsrohre auf einen hinter der Vortriebspresse gelenkig und zugfest verbundenen Gleitmantel aufgebracht, von welchem sie von der Vorschubpresse in das vorgeschnittene Rohrauflager geschoben werden.

Der durch die Blechdicke des Gleitmantels hervorgerufene Ziehspalt kann durch ein Füllmaterial bündig zwischen Leitungsrohrwandung und Rohrauflager mit Hilfe einer Verpreßeinrichtung verpreßt werden.

Um die Verlegegeschwindigkeit nicht zu beeinträchtigen, kann diese Verpreßeinrichtung mit der Vortriebspresse mitgeführt werden.

Die erfindungsgemäße Vorrichtung zur Durchführung des Verfahrens besteht in an sich bekannter Weise aus einem Schneidschuh und einer über eine Druckausgleichseinrichtung am Schneidschuh anliegenden Vortriebspresse. Die neue Vorrichtung ist dadurch gekennzeichnet, daß ein die Vortriebspresse umgebendes Arbeitsrohr vorgesehen ist, in dem die Vortriebspresse montiert ist, wobei das in Vorschubrichtung weisende Ende des Arbeitsrohres ein an die Druckausgleichsvorrichtung anliegendes Pressenwiderlager bildet.

Vorzugsweise sind zwischen der Druckausgleichsvorrichtung und dem Schneidschuh zur Einhaltung und Steuerung der Vortriebsrichtung Steuerpressen angeordnet.

Ferner kann die Vortriebspresse zweckmäßigerweise über einen Druckausgleichsring am Leitungsrohr angreifen, um das Leitungsrohr nicht zu beschädigen.

Weiterhin kann am entgegen der Vortriebsrichtung weisenden Ende des Arbeitsrohrs zur Führung des Druckausgleichsrings und des Preßstempels eine Führungseinrichtung angeordnet sein.

Ferner kann der Druckausgleichsrings in eine gelenkig und zugfest am Arbeitsrohr befestigten und nach oben geöffneten Blechhalbschale geführt werden.

Desweiteren können an den parallel zur Vortriebsrichtung verlaufenden Blechhalbschalkanten zur Aussteifung und Führung Schienen angebracht sein.

Zweckmäßigerweise können in den Führungsschienen innen, seitlich Führungsrollen angebracht sein, die auf am Druckausgleichsring angreifenden Teilen der Vortriebspresse aufliegen.

Zur besseren Aussteifung kann auf den Führungsschienen ein gesonderter Aussteifungsrahmen aufliegen.

Vorzugsweise ist die Vortriebspresse eine hydraulische Presse.

Die Erfindung ist in der Zeichnung beispielsweise veranschaulicht und im nachstehenden im einzelnen anhand der Zeichnung beschrieben. Es zeigen:
- Fig. 1: Aufbringen des ersten Leitungsrohres hinter die Vortriebseinrichtung,
- Fig. 2: Vordrücken des Vortriebswerkzeugs,
- Fig. 3: Aufbringen des zweiten Leitungsrohrs hinter die zusammengefahrene Presse,
- Fig. 4: Draufsicht auf den Druckausgleichsring vom Ende des Arbeitsrohrs aus.

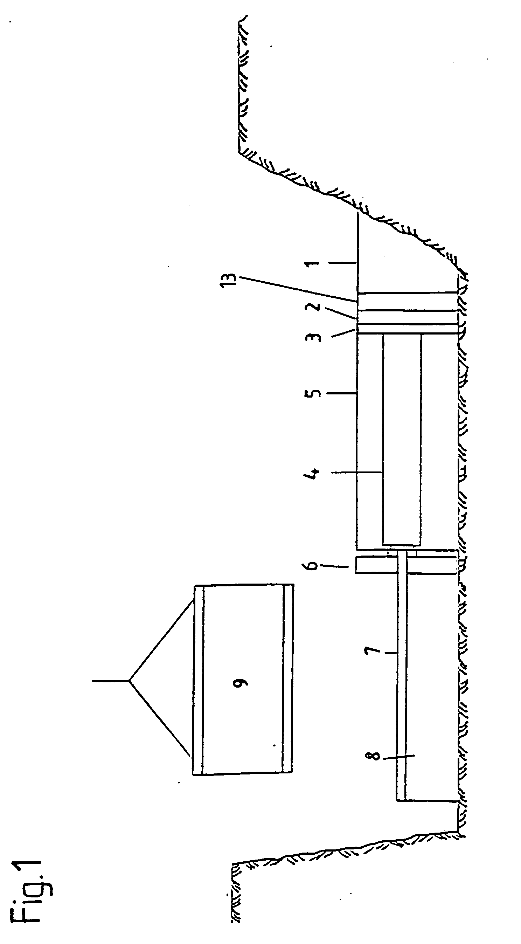

Wie in Fig. 1 dargestellt ist, wird auf die Vortriebseinrichtung, die in einer Baugrube, der sogenannten Startgrube, höhen- und fluchtgerecht eingerichtet wurde, von oben das erste Leitungsrohr abgesenkt. Dies geschieht zweckmäßigerweise mit einem Kran. Dabei kommt das Leitungsrohr 9 auf dem Gleitmantel 8 zu liegen.

Die Vortriebseinrichtung, die in den Figuren 1 bis 3 als Beispiel dargestellt ist, besteht aus einem Schneidschuh 1 und einer über eine Druckausgleichsrichtung 2 am Schneidschuh 1 anliegenden Vortriebspresse 4, die in ein Arbeitsrohr 5 montiert ist. Das in Vorschubrichtung weisende Ende des Arbeitsrohrs 5 bildet das an die Druckausgleichsvorrichtung 2 anliegende Pressenwiderlager.

Zwischen der Druckausgleichsvorrichtung 2 und dem Schneidschuh 1 sind zur Einhaltung und Steuerung der Vortriebsrichtung Steuerpressen 13 angeordnet. Die Vortriebspresse, die vorzugsweise eine hydraulische Presse ist, greift über einen Druckausgleichsring 6 am Leitungsrohr 9 an. Am entgegen der Vortriebsrichtung weisenden Ende des Arbeitsrohrs 9 sind zur Führung des Druckausgleichsrings 6 Schienenführungen 7 angeordnet. Der Druckausgleichsring 6 ist in einer gelenkig und zugfest am Arbeitsrohr 5 befestigten und nach oben geöffneten Blechhalbschale 10 geführt.

Das vom Schneidschuh aufgeworfene Erdreich wird vorzugsweise von einem Bagger, der vorzugsweise "vor Kopf" steht, aufgenommen.

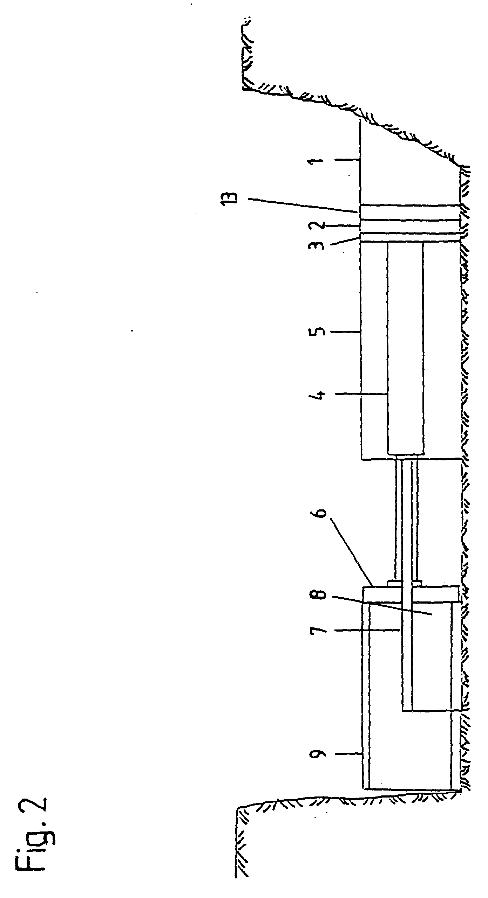

Nachdem das erste Leitungsrohr eingebracht wurde, wird wie in Fig. 2 erkennbar ist, das Vortriebswerkzeug durch die Vortriebspresse vorgedrückt und das Rohrauflager geschnitten, indem die Vortriebspresse das Leitungsrohr als Widerlager benutzt.

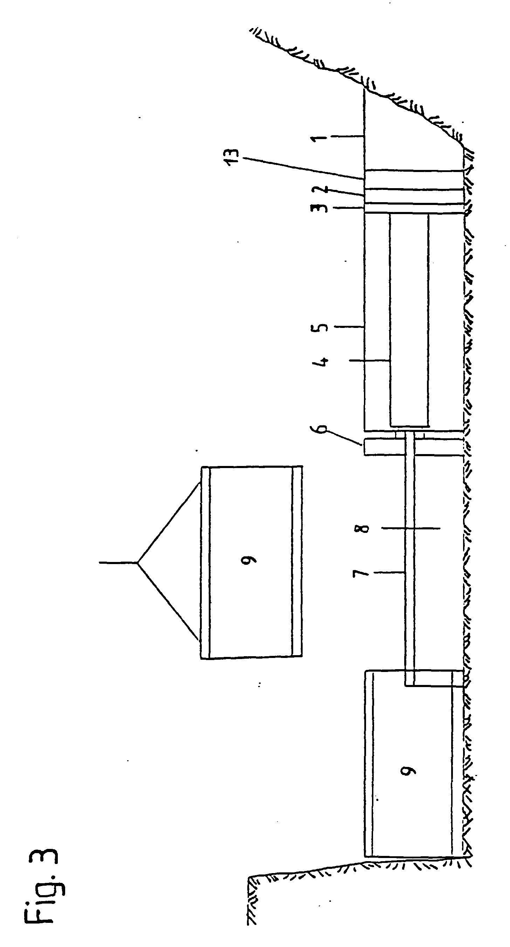

Nach Erreichen eines Vorschubs, der in etwa der Länge des nächsten zu verlegenden Leitungsrohrs entspricht, wird die Vortriebspresse in Vorschubrichtung zusammengefahren und von oben das nächste zu verlegende Leitungsrohr auf den Gleitmantel herabgelassen (Fig. 3). Dieses Leitungsrohr wird wiederum von der Vortriebspresse als Widerlager benutzt und der gesamte Vorgang wiederholt sich. Da der Gleitmantel , der vorzugsweise durch eine Blechhalbschale verwirklicht ist, beim Vortrieb in der Regel einen Ziehspalt hervorruft, kann dieser Ziehspalt durch ein Füllmaterial vorzugsweise eine Wassersuspension (Zement, Bentonit, Sand) bündig zwischen Rohrwandung und Rohrauflager verpreßt werden. Dazu wird zweckmäßigerweise eine Verpreßeinrichtung im Arbeitsrohr mitgeführt.

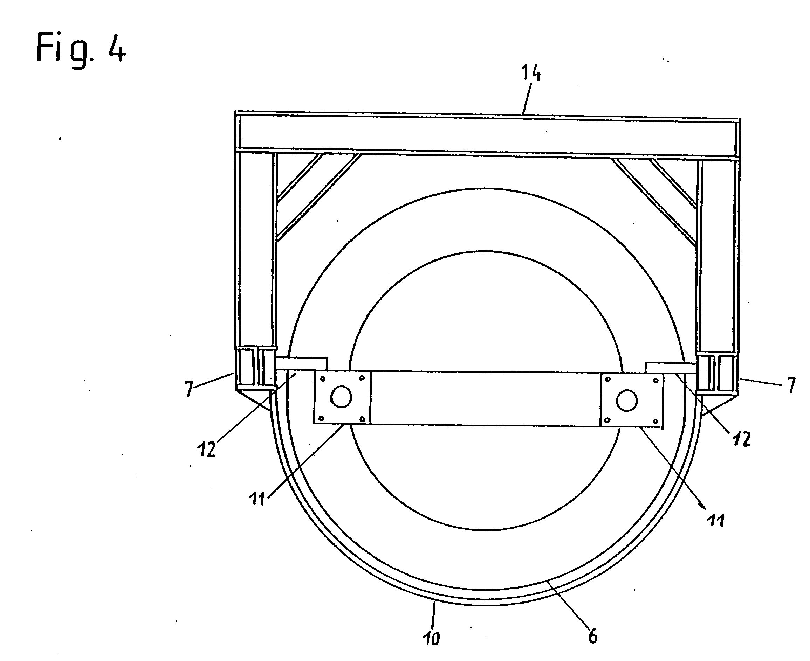

Fig. 4 zeigt den in einer Blechhalbschale 10 geführten Druckausgleichsring 6, der über die Aufnahmeteile 11 mit der Vortriebspresse verbunden ist. Auf den Blechhalbschalkanten, die nach oben weisen, verlaufen parallel zur Vortriebsrichtung Schienenführungen 7. In den Führungsschienen 7 sind innen, seitlich Führungsrollen 12 angebracht, die auf am Druckausgleichsring 6 angreifenden Teilen der Vortriebspresse aufliegen.

Zusätzlich liegt auf den Führungsschienen 7 zur besseren Aussteifung ein gesonderter Aussteifungsrahmen 14 auf.

### Bezugszeichenliste

- 1: Schneidschuh
- 2: Druckausgleichsvorrichtung
- 3: Pressenwiderlager
- 4: Vortriebspresse
- 5: Arbeitsrohr
- 6: Druckausgleichsring
- 7: Schienenführung
- 8: Gleitmantel
- 9: Leitungsrohr
- 10: Blechhalbschale
- 11: Aufnahmeteil für Vortriebspresse
- 12: Führungsrolle
- 13: Steuerpressen
- 14: Aussteifungsrahmen

## Patentansprüche

1. Verfahren zum Verlegen von Leitungsrohren, insbesondere von Kanalisationsrohren, wobei aus einer Startgrube heraus die Leitungsrohre (9) mit einer Vortriebseinrichtung, die im wesentlichen aus einer Vortriebspresse (4) und einem Vortriebswerkzeug besteht, in das Erdreich verlegt werden und mit Hilfe einer überirdischen Fördereinrichtung das anfallende Bodenmaterial abgetragen wird und wobei das zu verlegende Leitungsrohr (9) hinter der in der Startgrube höhen- und fluchtgerecht eingebrachten Vortriebseinrichtung auf ein Auflager aufgebracht wird, **dadurch gekennzeichnet,** daß
nach Aufbringen des zu verlegenden Leitungsrohres (9) auf das Auflager das Vortriebswerkzeug durch die Vortriebspresse (4) vorgedrückt wird und das Rohrauflager schneidet, indem die Vortriebspresse das Leitungsrohr (9) als Widerlager benutzt,
daß nach Erreichen eines Vorschubs, der etwa der Länge des nächsten zu verlegenden Leitungsrohrs entspricht, die Vortriebspresse in Vorschubrichtung zusammengefahren wird
und daß danach auf das frei gewordene Rohrauflager von oben das nächste zu verlegende Leitungsrohr aufgebracht wird, welches wiederum von der Vortriebspresse als Widerlager benutzt wird, und sich der gesamte Vorgang wiederholt.

2. Verfahren nach Anspruch 1, **dadurch gekennzeichnet,** daß die Leitungsrohre auf einen hinter der Vortriebspresse gelenkig und zugfest verbundenen Gleitmantel (8) aufgebracht werden, von welchem sie von der Vorschubpresse in das vorgeschnittene Rohrauflager geschoben werden.

3. Verfahren nach Anspruch 2, **dadurch gekennzeichnet,** daß der durch die Blechdicke des Gleitmantels hervorgerufene Ziehspalt durch ein Füllmaterial bündig zwischen Leitungsrohrwandung und Rohrauflager mit Hilfe einer Verpreßeinrichtung verpreßt wird.

4. Verfahren nach Anspruch 3, **dadurch gekennzeichnet**, daß die Verpreßeinrichtung mit der Vortriebspresse mitgeführt wird.

5. Vorrichtung zur Durchführung des Verfahrens nach Anspruch 1 mit einem Schneidschuh (1) und einer über eine Druckausgleichsvorrichtung (2) am Schneidschuh anliegenden Vortriebspresse (4), **dadurch gekennzeichnet,** daß ein die Vortriebspresse (4) umgebendes Arbeitsrohr (5) vorgesehen ist, in dem die Vortriebspresse montiert ist und daß das in Vorschubrichtung weisende Ende des Arbeitsrohres (5) ein an die Druckausgleichsvorrichtung (2) anliegendes Pressenwiderlager (3) bildet.

6. Vorrichtung nach Anspruch 5, **dadurch gekennzeichnet,** daß zwischen der Druckausgleichsvorrichtung (2) und dem Schneidschuh (1) zur Einhaltung und Steuerung der Vortriebsrichtung Steuerpressen (13) angeordnet sind.

7. Vorrichtung nach Anspruch 5 oder 6, **dadurch gekennzeichnet**, daß die Vortriebspresse über einen Druckausgleichsring (6) am Leitungsrohr (9) angreift.

8. Vorrichtung nach Anspruch 7, **dadurch gekennzeichnet**, daß am entgegen der Vortriebsrichtung weisenden Ende des Arbeitsrohres (5) zur Führung des Druckausgleichsrings (6) eine Führungseinrichtung angeordnet ist.

9. Vorrichtung nach Anspruch 8, **dadurch gekennzeichnet**, daß der Druckausgleichsring (6) in einer gelenkig und zugfest am Arbeitsrohr befestigten und nach oben geöffneten Blechhalbschale (1) geführt wird.

10. Vorrichtung nach Anspruch 9, **dadurch gekennzeichnet**, daß an den parallel zur Vortriebsrichtung verlaufenden Blechhalbschalkanten zur Aussteifung und Führung Schienen (7) angebracht sind.

11. Vorrichtung nach Anspruch 10, **dadurch gekennzeichnet**, daß in den Führungsschienen (7) innen, seitlich Führungsrollen (12) angebracht sind, die auf am Druckausgleichsring (6) angreifenden Aufnahmeteilen der Vortriebspresse (11) aufliegen.

12. Vorrichtung nach einem der Ansprüche 10 oder 11, **dadurch gekennzeichnet**, daß zur besseren Aussteifung auf den Führungsschienen ein gesonderter Aussteifungsrahmen (14) aufliegt.

13. Vorrichtung nach einem der Ansprüche 5 bis 12, **dadurch gekennzeichnet,** daß die Vortriebspresse eine hydraulische Presse ist.

## Claims

1. Method for laying pipes, in particular sewage pipes, in which the initial trench pipes (9) are laid in the ground by means of a driving device which substantially consists of a driving press (4) and a driving tool, the soil which accumulates is removed by means of a hoisting device above ground, and in which the pipe (9) to be laid is placed on a support behind the driving device, which is inserted at the correct height and is aligned in the initial trench,
characterised in that:
after the pipe (9) to be laid has been placed on the support, the driving tool is thrust forward by the driving press (4), and intersects the pipe support, whilst the driving press uses the pipe (9) as an abutment;
in that after feed corresponding approximately to the length of the next pipe to be laid has taken place, the driving press is displaced in the direction of feed;
and in that the next pipe to be laid is then placed from above on the pipe support which has become vacant, this pipe is once again used as an abutment by the driving press, and the entire process is repeated.

2. Method according to claim 1,
characterised in that the pipes are placed on a guide casing (8) which is connected in an articulated and resistant manner behind the driving press, from which guide casing they are thrust by the driving press into the pre-cut pipe support.

3. Method according to claim 2,
characterised in that the drawing gap created by means of the plate thickness of the guide casing is pressed flush between the pipe wall and pipe support, using a filler, by means of a pressing device.

4. Method according to claim 3,
characterised in that the pressing device is conveyed together with the driving press.

5. Device for implementation of the method according to claim 1 with a cutting sleeve (1) and a driving press (4) which abuts the cutting sleeve via a pressure compensation device (2),
characterised in that a work pipe (5) which surrounds the driving press (4) is provided, in which the driving press is fitted, and the end of the work pipe (5) which is in the direction of thrust forms a press abutment (3) adjacent to the pressure compensation device (2).

6. Device according to claim 5,
characterised in that control presses (13) are disposed between the pressure compensation device (2) and the cutting sleeve (1), in order to maintain and control the direction of advance.

7. Device according to claim 5 or 6,
characterised in that the driving press engages with the pipe (9) by means of a pressure compensation ring (6).

8. Device according to claim 7,
characterised in that a guide device is disposed at the end of the work pipe (5) which is opposite the direction of advance, in order to guide the pressure compensation ring (6).

9. Device according to claim 8,
characterised in that the pressure compensation ring (6) is guided in a plate half shell (1) open at the top, which is connected in an articulated, resistant manner to the work pipe.

10. Device according to claim 9,
characterised in that rails (7) are fitted to the edges of the plate half shell which are parallel to the direction of advance, for the purpose of strengthening and guiding.

11. Device according to claim 10,
characterised in that inner, lateral guide rollers (12) are attached to the guide rails (7), which rollers are supported on the take-up parts of the driving press (11) which engage with the pressure compensation ring (6).

12. Device according to claim 10 or 11,
characterised in that a separate strengthening frame (14) is provided on the guide rails, in order to improve strengthening.

13. Device according to any one of claims 5 to 12, characterised in that the driving press is a hydraulic press.

## Revendications

1. Procédé pour la pose de canalisations, en particulier de canalisations d'égout, dans lequel, à partir d'une fouille de départ, les canalisations (9) sont posées dans la terre avec un dispositif de creusement qui se compose essentiellement d'un dispositif d'avance (4) et d'un outil de creusement, les matériaux de déblai résultants sont enlevés au moyen d'un dispositif transporteur au-dessus du sol et la canalisation (9) à poser est mise en place sur une assise en arrière du dispositif de creusement installé à bonne hauteur et avec une orientation correcte dans la fouille de départ, caractérisé en ce que
après que la canalisation (9) à poser a été mise en place sur l'assise, l'outil de creusement est poussé en avant par le dispositif d'avance (4) et creuse l'assise, le dispositif d'avance prenant appui sur la canalisation (9) déjà posée,
après qu'a été atteinte une avance qui correspond à peu près à la longueur de canalisation à poser immédiatement après, le dispositif d'avance est rétracté dans la direction de l'avance,
puis la canalisation à poser immédiatement après est mise en place de haut en bas sur l'assise ainsi dégagée et sert à son tour d'appui pour le dispositif d'avance, et le processus entier est répété.

2. Procédé selon la revendication 1, caractérisé en ce que les canalisations sont déposées sur une chape glissante (8) qui est raccordée de manière articulée et résistante à la traction à l'arrière du dispositif d'avance et à partir de laquelle elles sont rejetées du dispositif d'avance dans l'assise préalablement creusée.

3. Procédé selon la revendication 2, caractérisé en ce que le jeu créé par l'épaisseur de tôle de la chape glissante est comblé par injection d'une matière de remplissage entre la paroi de la canalisation et l'assise, au moyen d'un dispositif d'injection.

4. Procédé selon la revendication 3, caractérisé en ce que le dispositif d'injection est déplacé en même temps que le dispositif d'avance.

5. Dispositif pour l'exécution du procédé selon la revendication 1, comportant un sabot tranchant (1) et un dispositif d'avance (4) faisant suite au sabot tranchant par l'intermédiaire d'un dispositif d'égalisation de pression (2), caractérisé en ce qu'il est prévu un tube de travail (5) qui entoure le dispositif d'avance (4) et dans lequel est monté le dispositif d'avance, et en ce que l'extrémité du tube de travail (5) dirigée dans le sens de l'avance constitue un appui de pressage (3) contigu au dispositif d'égalisation de pression (2).

6. Dispositif selon la revendication 5, caractérisé en ce que des vérins de commande (13) sont disposés entre le dispositif d'égalisation de pression (2) et le sabot tranchant (1) pour maintenir et commander la direction de l'avance.

7. Dispositif selon la revendication 5 ou 6, caractérisé en ce que le dispositif d'avance s'appuie sur la canalisation (9) par l'intermédiaire d'un anneau d'égalisation de pression (6).

8. Dispositif selon la revendication 7, caractérisé en ce qu'un dispositif de guidage est prévu à l'extrémité du tube de travail (5) dirigée à l'inverse du sens de l'avance, pour le guidage de l'anneau d'égalisation de pression (6).

9. Dispositif selon la revendication 8, caractérisé en ce que l'anneau d'égalisation de pression (6) est guidé dans une demi-cuvette en tôle (10) qui est fixée au tube de travail de manière articulée et résistante à la traction et qui est ouverte vers le haut.

10. Dispositif selon la revendication 9, caractérisé en ce que des rails (7) sont fixés, à des fins de raidissement et de guidage, aux bords de la demi-cuvette en tôle qui s'étendent parallèlement à la direction de l'avance.

11. Dispositif selon la revendication 10, caractérisé en ce que des galets internes de guidage latéral (12), qui sont montés sur des éléments (11) du dispositif d'avance qui agissent sur l'anneau d'égalisation de pression (6), sont disposés dans les rails de guidage (7).

12. Dispositif selon la revendication 10 ou 11, caractérisé en ce qu'un cadre de raidissement séparé (14) est monté sur les rails de guidage en vue d'un meilleur raidissement.

13. Dispositif selon l'une quelconque des revendications 5 à 12, caractérisé en ce que le dispositif d'avance est un vérin hydraulique.
